(19) Europäisches Patentamt
European Patent Office
Office européen des brevets

(11) **EP 4 671 861 A1**

(12) **EUROPEAN PATENT APPLICATION**

(43) Date of publication:
**31.12.2025 Bulletin 2026/01**

(21) Application number: **25185430.3**

(22) Date of filing: **26.06.2025**

(51) International Patent Classification (IPC):
**G02F 1/365** (2006.01)     **H04J 3/06** (2006.01)
**H04J 14/02** (2006.01)

(52) Cooperative Patent Classification (CPC):
**G02F 1/365; H04J 3/0667; H04J 14/0307;
H04L 7/0075**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.06.2024 US 202463664413 P
28.06.2024 US 202463665783 P**

(71) Applicant: **Vector Atomic, Inc.
Pleasanton, CA 94566 (US)**

(72) Inventors:
• **ROSLUND, Jonathan David
Pleasanton, California, 94566 (US)**
• **CINGOZ, Arman
Pleasanton, California, 94566 (US)**
• **FUJITA, Junichiro
Pleasanton, California, 94566 (US)**
• **KOWLIGY, Abijith
Pleasanton, California, 94566 (US)**

(74) Representative: **Kehl, Ascherl, Liebhoff & Ettmayr
Patentanwälte Partnerschaft mbB
Emil-Riedel-Straße 18
80538 München (DE)**

(54) **OPTICAL TWO-TONE TIME TRANSFER**

(57) A photonic platform (e.g., a photonic chip) is described which can include integrated components such as laser cavities, modulators, optical multiplexers/-demultiplexers, photodiodes, and supercontinuum generators that are connected using optical waveguides and splitters/combiners to perform two-way optical time transfer. Integrating various combinations of these optical components onto the same photonic chip (e.g., photonic integrated circuit (PIC)) can reduce the size of the device, reduce noise, improve assembly by reducing the amount of fiber connections, and the like. A digital processing system is also described for performing two-way optical time transfer.

**FIG. 5**

**Description**

BACKGROUND

Two-way optical time transfer often involves two sites or two vehicles exchanging optical pulses in free space with predefined repetition rates. Determining when the pulses arrive at each site enables the sites to extract timing deviation (if any) between the respective clocks and perform clock synchronization. In a simplistic example, each site can include a photodetector for detecting when the optical pulses transmitted by the other site arrives. However, jitter in the electronics does not allow the sites to determine the pulse arrival time with an accuracy greater than a picosecond. That is, the electronics distort the converted optical pulse which makes it difficult to accurately determine (e.g., with an accuracy greater than a picosecond) when the center of the pulses arrive. In many clock synchronization systems, greater accuracy is desired (e.g., femtosecond accuracy) between the clocks at the sites.

One strategy for the synchronization and syntonization of atomic clocks over optical free-space utilizes two frequency combs at each link site. The first frequency comb is stabilized to the local reference oscillator (e.g., atomic clock, Fabry-Perot optical reference cavity, etc.), and a second frequency comb is exchanged between sites over the link. In one implementation, the repetition rate of the exchanged comb is purposely offset from the reference oscillator stabilized comb. While this strategy has proven successful, it possesses several drawbacks. Notably, the use of a second comb at each site that is launched over the free-space link increases the complexity, power consumption, and expense of the system. Furthermore, the derived timing information and the SNR of its retrieval is limited by the duty cycle of the pulse-based system. This approach also requires careful dispersion management between the local frequency comb and the received frequency comb in order to avoid undesirable pulse broadening, which decreases the measurement sensitivity.

An alternative approach utilizes a continuous wave (CW) laser to transfer optical timing information between two sites over a free-space link. In this implementation, the master site splits the light to be transferred. One portion of it remains at the master site while the other portion is frequency shifted and sent across the free-space link to the remote site. At the remote site, a portion of the received light is sent back to the master site, where it is compared to the original local light sample. However, this method is prone to cycle slips and Doppler cancellation only works after the light has traversed the link twice (out to the remote site and back to the local site). Since the one-way link loss is squared, the power requirement for this approach is significantly higher.

SUMMARY

One embodiment herein is a PIC that includes waveguides configured to combine a first pair of continuous wave (CW) optical signals with a second pair of CW optical signals as part of performing two-way optical time transfer where the second pair of CW optical signals are received at the PIC via a link to a remote platform. The PIC also includes a multiplexer integrated into the PIC where the multiplexer is configured to combine the first pair of CW optical signals before the first pair of CW optical signals are transmitted from the PIC to the remote platform and a demultiplexer integrated into the PIC where the demultiplexer is configured to separate the second pair of CW optical signals into different ones of the waveguides.

Another embodiment herein is a photonic system that includes a PIC that includes waveguides configured to combine a first pair of continuous wave (CW) optical signals with a second pair of CW optical signals as part of performing two-way optical time transfer where the second pair of CW optical signals are received at the PIC via a link to a remote platform. The photonic system also includes a laser chip mated to the PIC to generate a first one of the first pair of CW optical signals.

Another embodiment herein is a system for performing two-way optical time transfer. The system includes an analog to digital converter (ADC) configured to convert a beatnote based on a locally-generated optical signal and a remotely received optical signal to a digital signal, a IQ demodulator configured to receive the digital signal, a loop filter coupled to an output of the IQ demodulator, and a numerical tracking oscillator coupled to an output of the loop filter where the numerical tracking oscillator mirrors phase fluctuations corresponding to the beatnote.

BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.

Figure 1 illustrates a continuous wave two-wave optical time transfer system, according to one embodiment.

Figure 2 is a flowchart for determining a timing deviation from performing continuous wave two-way optical time transfer, according to one embodiment.

Figure 3 is a flowchart for performing a continuous wave two-way optical time transfer, according to one embodiment.

Figures 4A and 4B illustrate photonic integrated circuits and electrical components for performing a continuous wave two-way optical time transfer, according to one embodiment.

Figure 5 illustrates a photonic integrated circuit for performing a continuous wave two-way optical time transfer, according to one embodiment.

Figure 6 illustrates a photonic integrated circuit for performing a continuous wave two-way optical time transfer, according to one embodiment.

Figure 7 illustrates a photonic integrated circuit for performing a continuous wave two-way optical time transfer, according to one embodiment.

Figure 8 illustrates a photonic integrated circuit for performing a continuous wave two-way optical time transfer with supercontinuum generation, according to one embodiment.

Figure 9 illustrates a photonic integrated circuit for performing a continuous wave two-way optical time transfer with supercontinuum generation, according to one embodiment.

Figure 10 is a system for synchronizing clocks between two platforms, according to one embodiment.

To facilitate understanding, identical reference numerals have been used, where possible, to designate identical elements that are common to the figures. It is contemplated that elements and features of one embodiment may be beneficially incorporated in other embodiments without further recitation.

DETAILED DESCRIPTION

Embodiments herein describe a continuous wave (CW) two-way optical time transfer (TT) system that relies on fewer frequency combs than previous two-way optical TT techniques and does not require high power lasers like previous CW techniques. The embodiments herein lock a local frequency comb to a local reference oscillator (e.g., optical atomic clock, microwave atomic clock, Fabry-Perot optical reference cavity, etc.) in a local platform. The platform then generates two CW optical signals with different frequencies and locks those optical signals to the local frequency comb. The local platform then transmits its two CW optical signals to a remote platform and receives CW optical signals (having approximately the same frequencies as the two CW optical signals generated by the local platform) from the remote platform. Based on comparing its local CW optical signals with the received CW optical signals, the local platform can determine a timing deviation between its local reference oscillator (e.g., a local clock) and a remote reference oscillator (or clock) in the second platform.

The embodiments herein also describe a photonic platform (e.g., a photonic chip) which includes integrated components such as laser cavities, modulators, optical multiplexers/demultiplexers, photodiodes, and supercontinuum generators that are connected using optical waveguides and splitters/combiners. Integrating various combinations of these optical components onto the same photonic chip (e.g., photonic integrated circuit (PIC)) can reduce the size of the device, reduce noise, improve assembly (by reducing the amount of fiber connections), and the like.

The CW TT system can include a digital backend for processing beatnotes detected using photodiodes on (or coupled to) the photonic chip. Because the phase difference between the exchanged CW signals can wrap (e.g., be larger than two pi), the digital backend can include a phase extraction module for unwrapping the phase of the detected signals, but this is difficult to implement. Instead, in one embodiment, the digital backend includes a phase locked loop that includes a tracking oscillator that mirrors the phase fluctuation of a beatnote. The output of the tracking oscillator can be used to reduce noise in embodiments where only one pair of CW signals is exchanged, or can be used with a pair of phase locked loops to identify non-common phase fluctuations in embodiments where two pairs of CW signals are exchanged.

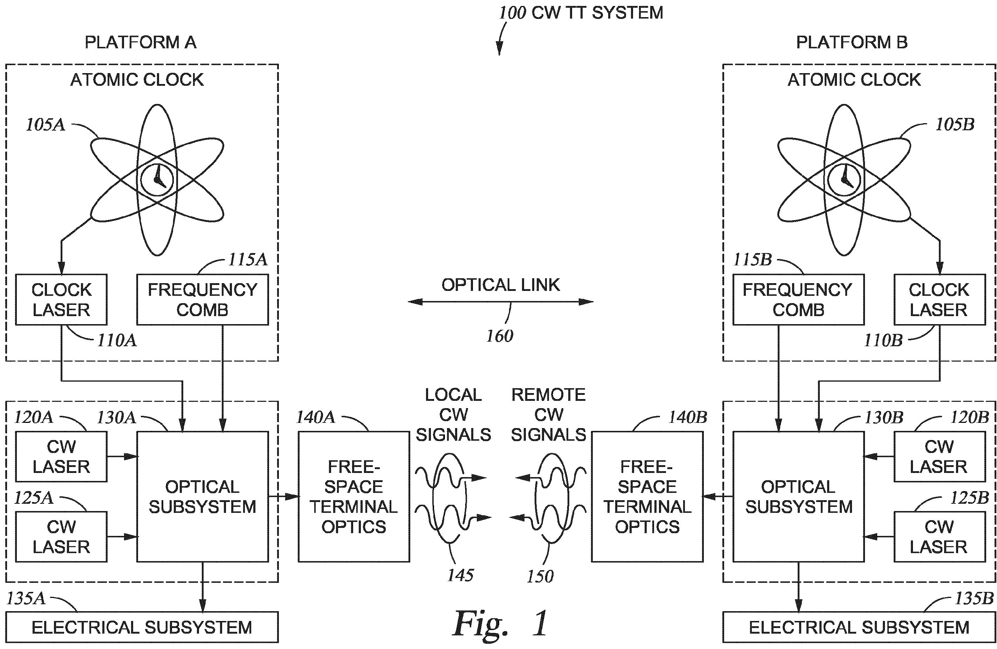

Figure 1 illustrates a CW optical TT system 100, according to one embodiment. The CW TT system 100 includes Platform A and Platform B which may be disposed at different locations on the earth's surface that are within line of sight (LOS) of each other, either directly or through the use of one or more mirrors. In another embodiment, one of the platforms is disposed at a stationary location (or site) on the earth's surface while the other platform is disposed on a moving vehicle - e.g., a ground vehicle or a flying vehicle such as a plane, drone, or satellite. In yet another embodiment, both of the platforms may be disposed on moving platforms such as a car and a plane, two planes, two satellites, one plane and one satellite, etc.

In this example, Platforms A and B have the same components - i.e., an atomic clock 105, clock laser 110, frequency comb 115, two CW lasers 120, 125, an optical subsystem 130, an electrical subsystem 135, and free-space terminal optics 140. While an atomic clock 105 is shown, any kind of high precision clock can be used. The atomic reference 105 is used the stabilize the frequency of the clock laser 110, which generates an optical signal that is transmitted to the optical subsystem 130. The frequency comb 115 also generates an optical signal that is transmitted to the optical subsystem 130. The frequency comb 115 generates a train of light pulses with a repetition rate that is in the easy-to-measure radio-frequency range, unlike the optical frequency of the clock laser 110.

As discussed in more detail below, the optical subsystem 130 locks (or stabilizes) the optical signal generated by the frequency comb 115 (which may be self-referenced) to the optical signal generated by the clock laser 110. This process transfers the fractional instability of the atomic clock 105 to the optical signal generated by the self-referenced frequency comb 115. Thus, any jitter in the clock 105 is transferred to the optical signal generated by the frequency comb 115. However, instead of using a self-referenced comb 115, the frequency comb 115 can be locked to two lasers. For example, the second harmonic of a seed laser could be used to generate a second laser which can be locked to the frequency comb 115.

The CW lasers 120, 125 transmit two optical signals to the optical subsystem 130. In one embodiment, the two optical signals are not pulsed. That is, unlike **TT** schemes that transmit pulsed optical signals, the two optical signals are CW waves that are not pulsed (e.g., are unmodulated). However, these optical signals are CW waves at different frequencies. For example, the optical signals may have frequencies that differ by more than 50 GHz, and in one embodiment, differ by 100GHz or more. The frequency difference or offset between the lasers 120, 125 may vary based on the application. As discussed below, the smaller the frequency difference, the easier it is for the platforms to track the cycles (or fringes), but it is also more difficult to discriminate timing jitter between the clock 105A in Platform A and the clock 105B in Platform B. Thus, the frequency difference or offset can depend on the particular implementation.

In one embodiment, the CW lasers 120, 125 have wavelengths that are around 1550 or 1560 nanometers since these lasers are common in many telecommunication systems.

The optical subsystem 130 locks (or stabilizes) both of the CW lasers 120, 125 to the optical signal generated by the frequency comb 115. Thus, the fractional instability of the atomic clock 105 is transferred to the optical signals generated by the CW lasers 120, 125. That is, any jitter in the clock 105 is transferred to the optical signal generated by the frequency comb 115, which in turn transfers that jitter to the optical signals generated by the CW lasers 120, 125.

The terminal optics 140 transmit the two CW optical signals to the other platform via a free space optical link 160. In this case, Figure 1 is from the perspective of Platform A where its local CW signals 145 are transmitted to the free-space terminal optics 140B of Platform B while the remote CW signals 150 generated by Platform B are received at the terminal optics 140A of Platform A. That is, the two platforms exchange their two CW optical signals. In general, the CW optical signals have similar frequencies in that a first one of the local CW optical signals 145 generated by Platform A has a same frequency (or a known frequency offset) as a first one of the remote CW signals 150 generated by Platform B and a second one of the local CW optical signals 145 generated by Platform A has a same frequency (or a known frequency offset) as a second one of the remote CW signals 150 generated by Platform B.

While Figure 1 illustrates exchanging the two CW optical signal in free space, in another embodiment the two CW optical signals can be exchanged using an optical fiber (or multiple optical fibers). This is advantageous since direct line of sight is not required, and the CW signals can be transferred without access to the outside (e.g., if Platforms A and B are underground).

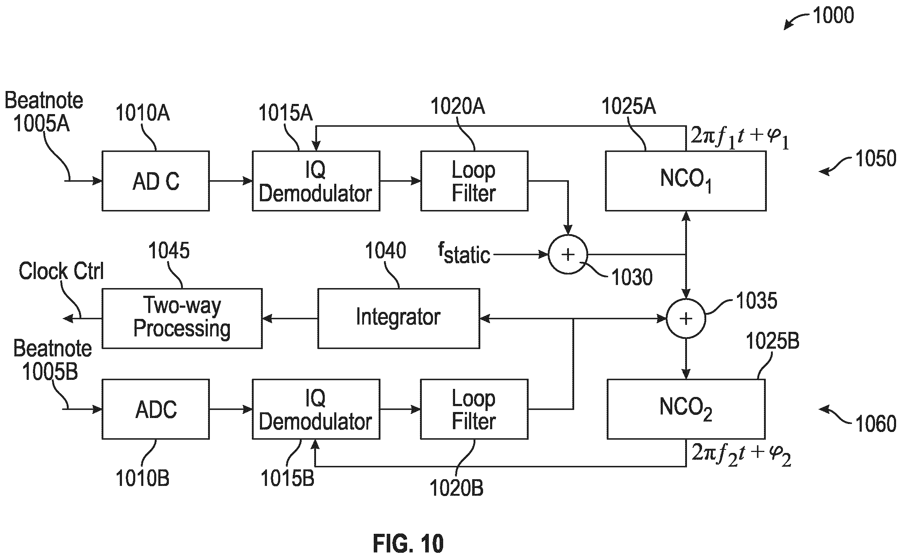

The local and remote CW signals 145, 150 are compared to each other in the optical subsystem 130. In one embodiment, two beatnotes are produced in the optical subsystem 130 between the two pairs of CW lasers. The electrical subsystem 135 can then determine a differential phase jitter between these two beatnote pairs which reveals the relative group delay jitter between the two frequency combs 115 in the two platforms. This is discussed in more detail in later Figures. Using the differential phase jitter, the platforms can determine a timing deviation between the atomic clock 105A and the atomic clock 105B. Determining the timing deviation is discussed in more detail in Figure 10.

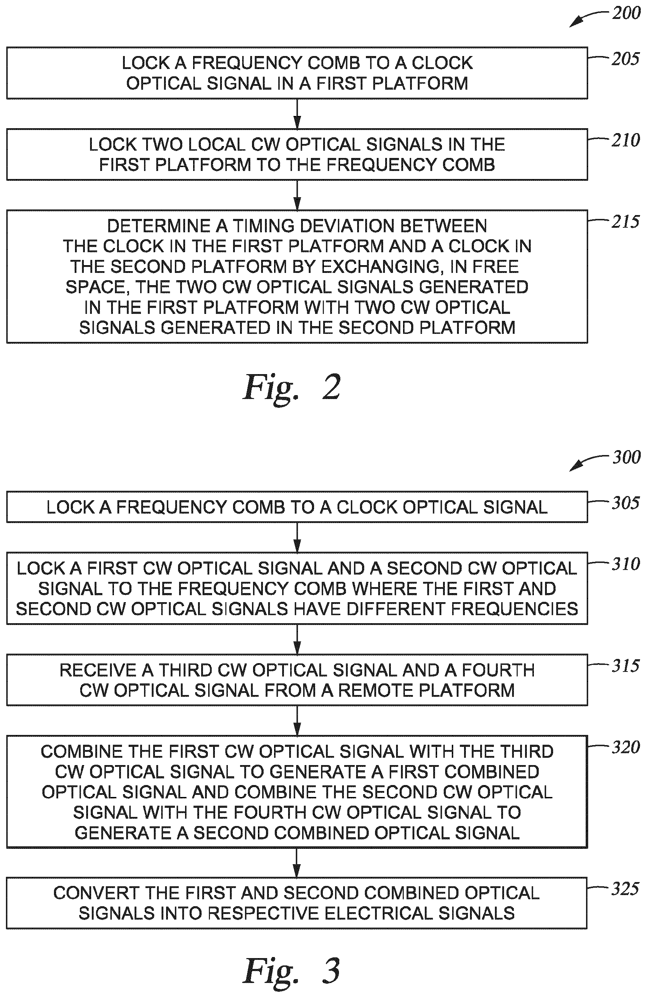

Figure 2 is a flowchart of a method 200 for determining a timing deviation from performing CW optical TT, according to one embodiment. The technique illustrated in Figure 2 may be performed simultaneously at both Platform A and Platform B in Figure 1.

At block 205, a first platform locks a frequency comb to a clock optical signal. Referring to Figure 1, the optical subsystem 130A receives optical signals from the clock laser 110A and the frequency comb 115A. The subsystem 130A locks (or stabilizes) the optical signal of the frequency comb 115 to the optical signal generated by the clock laser 110, thereby transferring the fractional instability of the atomic clock 105 to the optical signal generated by the frequency comb 115A. In some embodiments, the comb 115A is self-referenced, or alternatively, the frequency comb 115A can be locked to two lasers.

At block 210, the first platform locks two local CW optical signals to the optical signal generated by the frequency comb. For example, the optical subsystem 130A receives optical signals from the CW lasers 120A and 125A which are then locked to the optical signal of the frequency comb 115A so now the fractional instability of the atomic clock 105 is transferred to the optical signals generated by the CW lasers 120A and 125A. Notably, the frequencies of the optical signals generated by the CW lasers 120A and 125A are different.

At block 215, the first platform determines a timing deviation between its clock and a clock in the second platform by exchanging, in free space, the two CW optical signals generated in the first platform with the two CW optical signals generated in the second platform. This is illustrated in Figure 1 where the local CW signals 145 generated by Platform A are transmitted to Platform B and the remote CW signals 150 generated by Platform B are received at Platform A. The details for determining the timing deviation are discussed in the figures that follow.

Once the timing deviation is determined, one or both of the atomic clocks in the platforms can be adjusted so they have the same time, which can include performing both frequency synching (syntonization) and phase adjustment (synchronization). For example, measurements made at each platform can be transmitted to the other using conventional means (e.g., radio frequency transmission) to stabilize the link.

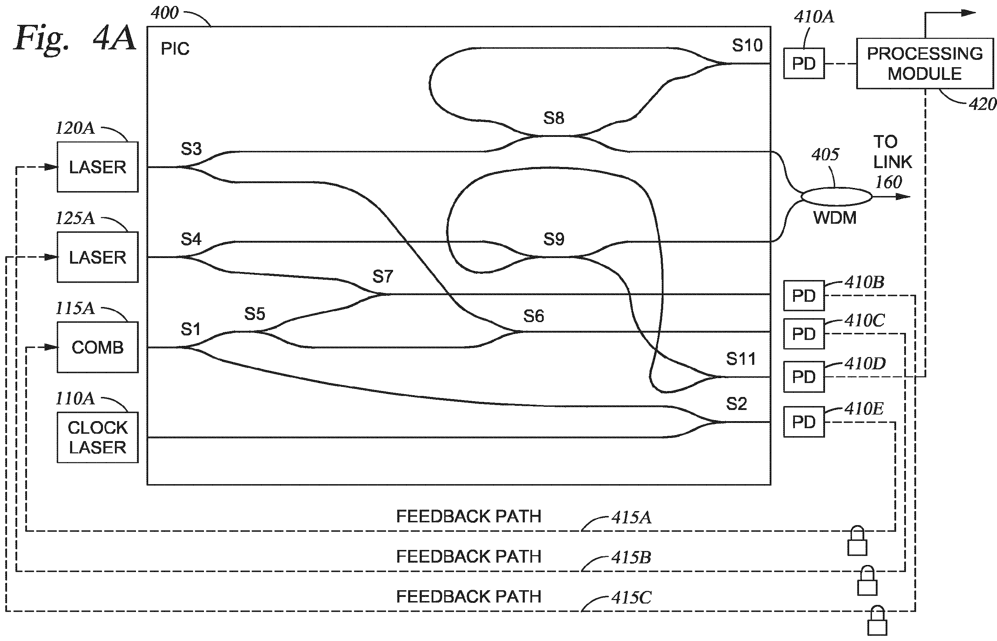

Figure 3 is a flowchart of a method 300 for performing CW optical TT, according to one embodiment. The technique illustrated in Figure 3 may be performed simultaneously at both Platform A and Platform B in Figure 1. Further, each block in the method 300 is discussed in tandem with Figure 4A, which illustrates a photonic integrated circuit and electrical components for performing a CW optical TT.

At block 305, a first platform locks a frequency comb to a clock optical signal. Referring to Figure 4A, it illustrates a photonic integrated circuit (PIC) 400 that receives an optical signal from the frequency comb 115A and an optical signal from the clock laser 110A. The clock laser 110A can have a frequency $f_{opt}^A$ and has been stabilized to an atomic reference (e.g., an atomic clock).

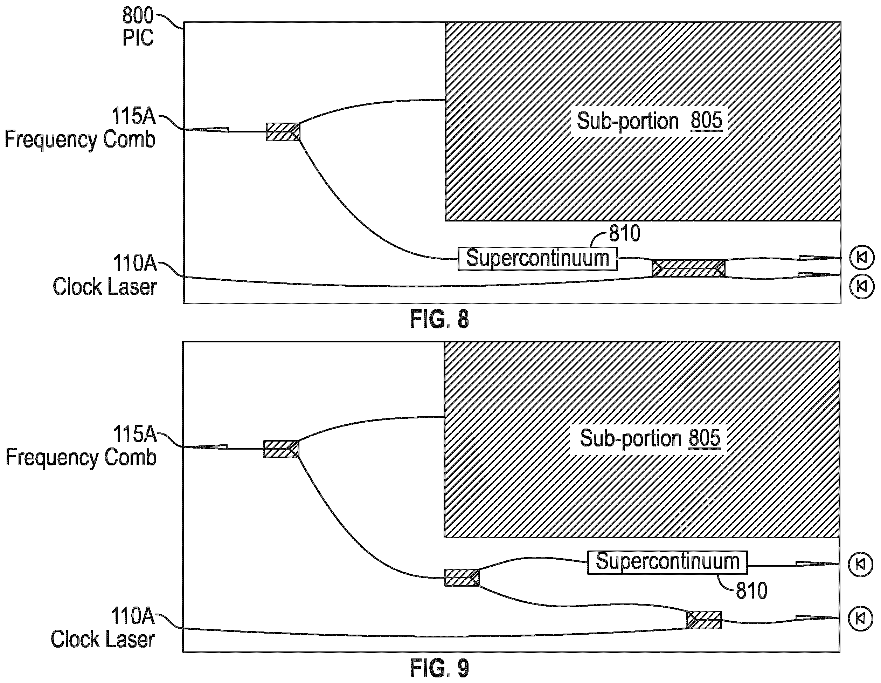

The frequency comb is split by the splitter S1 (e.g., a Y-junction or Y-splitter). A portion of this comb light is combined with the clock light at splitter S2, where it exits the PIC 400 and is detected with photodetector (PD) 410E. In one embodiment, the comb 115A is then stabilized using the optical beatnote generated by the PD 410E in a feedback path 415A as well as a f-2f self-referencing scheme to generate a self-referenced comb 115A (not shown, but may also be included on the PIC as shown in Figure 8). In this manner, the PIC 400 transfers the stability of the optical frequency reference (e.g., the atomic clock) to the frequency comb 115A.

In another embodiment, the PIC 400 transfers the stability of the optical frequency reference (e.g., the atomic clock) to the frequency comb 115A without self-referencing the frequency comb 115A. In that example, two clock lasers are separately combined in the PIC 400 with the frequency comb 115A where the two combined optical signals are detected by separate PDs. In one embodiment, the two clock lasers can be generated when adjusting the wavelength of a seed laser, where a second harmonic can be used as a second clock laser.

In another embodiment, if a microwave clock (e.g., a microwave atomic clock) is used as the local reference oscillator rather than an optical clock, instead of locking the frequency comb 115A to a clock laser, the frequency comb 115A can be locked to the microwave clock electronically. In that case, the PD 410E can be used to detect the frequency comb 115A repetition rate (without combining the frequency comb 115A with any other optical signals). The repetition rate of the frequency comb 115A can then be identified using the output of the PD 410E and locked to the microwave clock. The other degree of freedom for the frequency comb 115A is then locked with self-referencing.

At block 310, the first platform locks two local CW optical signals to the optical signal generated by the frequency comb. Two CW lasers 120A and 125A are introduced onto the PIC 400, and each is split with splitters S3 and S4. The remaining comb light is split at splitter S5, where it is combined with the light from splitters S3 and S4 (i.e., the lasers 120A and 125A) by splitters S6 and S7, respectively. The combined outputs from splitters S6 and S7 are detected by PD 410C and PD 410B, respectively. The beatnotes from the PD 410C and PD 410B are used to phase lock the lasers 120A and 125A to the frequency comb 115A, respectively, via feedback paths 415B and 415C. This process transfers the stability of the atomic clock to the lasers 120A and 125A.

The electric field of the light exiting splitter S3 can be expressed as: $\sqrt{P_1^A} \cdot \; cos[2\pi(f_1^A + \Delta_1^A)\,t]$, where $P_1^A$ is the power of laser 120A at Platform A, $f_1^A$ is the frequency of the comb tooth to which the laser 120A is phase-locked at Platform A, and $\Delta_1^A$ is the offset frequency between the laser 120A and the comb tooth $f_1^A$ at Platform A. An analogous expression exists for the laser 125A.

The laser 120A stabilized light exiting the upper port of the splitter S3 is then split again at coupler S8 and a similar process occurs for laser 125A at the coupler S9. One part of the outputs at couplers S8 and S9 exits the PIC 400, where they are combined at an external wavelength division multiplexer (WDM) 405, which can be a fiber optic component. The combined output of this WDM 405 is then transmitted, in free space, on the link 160 to the other platform (e.g., Platform B). In one embodiment, the WDM 405 is separate from the PIC 400, but in other embodiments, the WDM 405 could be on the PIC 400 and be implemented using, for example, an arrayed waveguide grating (AWG).

Platform B can have an identical optical configuration with two lasers of nominally the same free-running frequency as those at Platform A. The stabilization process described above also occurs at Platform B. Thus, the two Platform B CW lasers possess the same frequency instability as the atomic reference or clock at Platform B, $f_{opt}^B$.

At block 315, the first platform receives a third CW optical signal and fourth CW optical signal from a remote platform. For example, the optical link 160 is bidirectional so that light from Platform B crosses the link, is received by the two-way terminal at Platform A, and enters the WDM 405. The two lasers transmitted by Platform B are separated by the WDM 405 and are coupled onto the PIC 400.

At block 320, the PIC combines the first CW optical signal and the third CW optical signal to generate a first combined optical signal. The PIC also combines the second CW optical signal with the fourth CW optical signal to generate a second combined optical signal. In Figure 4A, the received CW optical signals enter the couplers S8 and S9, where they mix with the local CW lasers 120A and 125A of Platform A. The combined fields of the optical signals at splitters S10 and S11 may then be written as:

$$E_{S10} = \sqrt{P_{1,LO}^A} \cdot cos[2\pi(f_1^A + \Delta_1^A)t] + \sqrt{T_{link} \cdot P_{1,link}^B} \cdot cos[2\pi(f_1^B + \Delta_1^B) \cdot (t - n_1 L/c)]$$

$$E_{S11} = \sqrt{P_{2,LO}^A} \cdot cos[2\pi(f_2^A + \Delta_2^A)t] + \sqrt{T_{link} \cdot P_{2,link}^B} \cdot cos[2\pi(f_2^B + \Delta_2^B) \cdot (t - n_2 L/c)]$$

where $T_{link}$ is the link loss and $n_{1,2}$ are the indices of refraction of the link for lasers 120A and 125A. It should be noted that differential phase noise between the two ports of the WDM 405 and the PIC 400 can be captured by defining unique indices of refraction $n_{1,2}$ for each laser.

At block 325, the first platform converts the first and second combined optical signals into respective electrical signals. In Figure 4A, the combined light fields are detected at PD 410A and PD 410D. The photocurrent at PD 410A is expressed as:

$$i_4^A = R \cdot \{ P_{1,LO}^A + T_{link} \cdot P_{1,link}^B + 2\sqrt{T_{link} P_{1,LO}^A P_{1,link}^B} \cdot cos[2\pi(f_1^A - f_1^B)t + 2\pi(\Delta_1^A - \Delta_1^B)t +$$
$$2\pi(f_1^B + \Delta_1^B) \cdot n_1 L/c] \}$$

where R is the photodiode responsivity, and the signal has been appropriately low-pass filtered. The first two terms of this expression for the detected photocurrent appear at DC, but the third term appears at AC. The first term of the AC sinusoid is what the Platforms A and B detect in order to identify the timing deviation. It is nominally a very small temporal variation that describes the relative frequency instability of the atomic clock at Platform A with respect to the one at Platform B. The second term is user controllable and is determined by the offset lock frequencies at the two platforms. The third term can vary rapidly since the link distance L and/or index of refraction may be unstable during the acquisition. A similar expression describes the photocurrent at PD 410D:

$$i_5^A = R \cdot \{ P_{2,LO}^A + T_{link} \cdot P_{2,link}^B + 2\sqrt{T_{link} P_{2,LO}^A P_{2,link}^B} \cdot cos[2\pi(f_2^A - f_2^B)t + 2\pi(\Delta_2^A - \Delta_2^B)t +$$
$$2\pi(f_2^B + \Delta_2^B) \cdot n_2 L/c] \}$$

Referring to the structure in Figure 4A, in one embodiment, the PIC 400 and the optical components therein (e.g., the splitters) form the optical subsystem 130 in Figure 1. However, instead of implementing the optical subsystem 130 as a PIC, in other embodiments, the optical subsystem 130 may be discrete splitters that are coupled by optical fibers. In yet another embodiment, the optical subsystem 130 may include optical components that are coupled using free-space communication paths. Thus, the PIC 400 is just one example of a suitable optical subsystem 130.

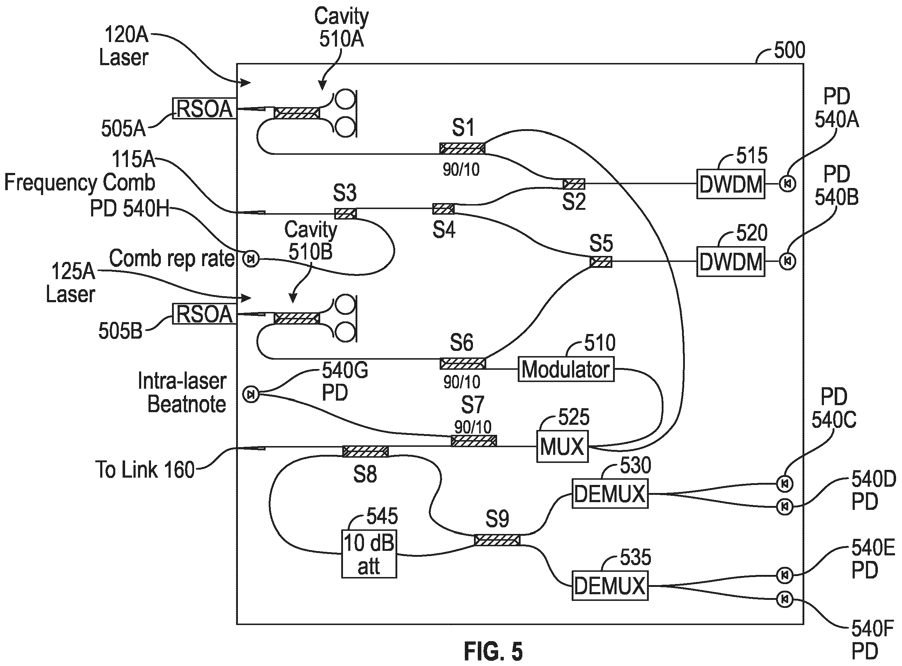

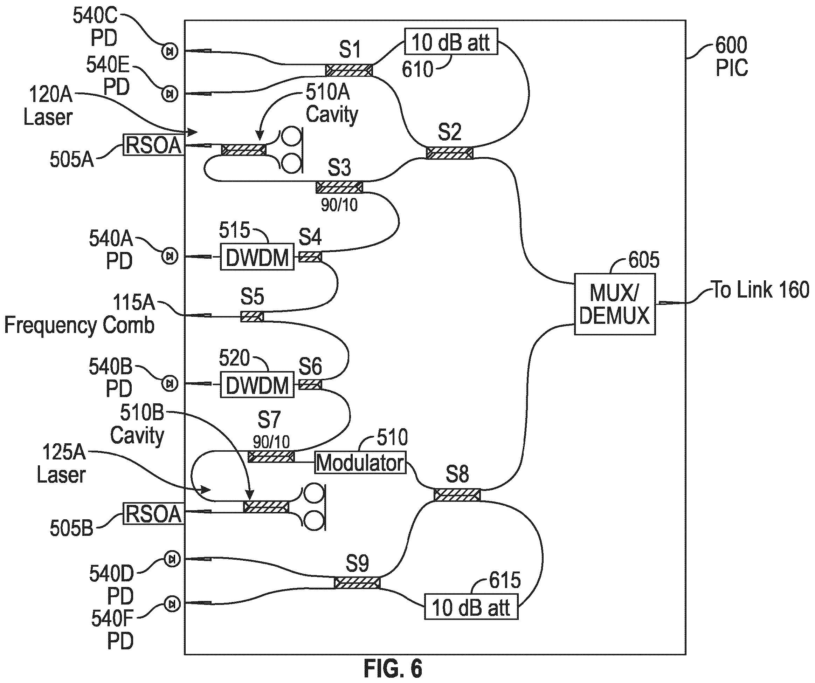

The PDs 410A-E, the feedback paths 415A-C, and a processing module 420 may form part of the electrical subsystem 135. In addition, the electrical subsystem 135 may include other optical components (e.g., hardware or software) for processing the signals output by PDs 410A and 410D, which is discussed in Figures 5 and 6. The electrical subsystem 135 can include an application specific IC (ASIC), FPGA, computer system, and the like for implementing the processing module 420.

In one embodiment, the WDM 405 is part of the free-space terminal optics 140. In addition, the optics 140 may include other optical components such as a telescope or focusing element to direct the CW optical signals towards the remote platform.

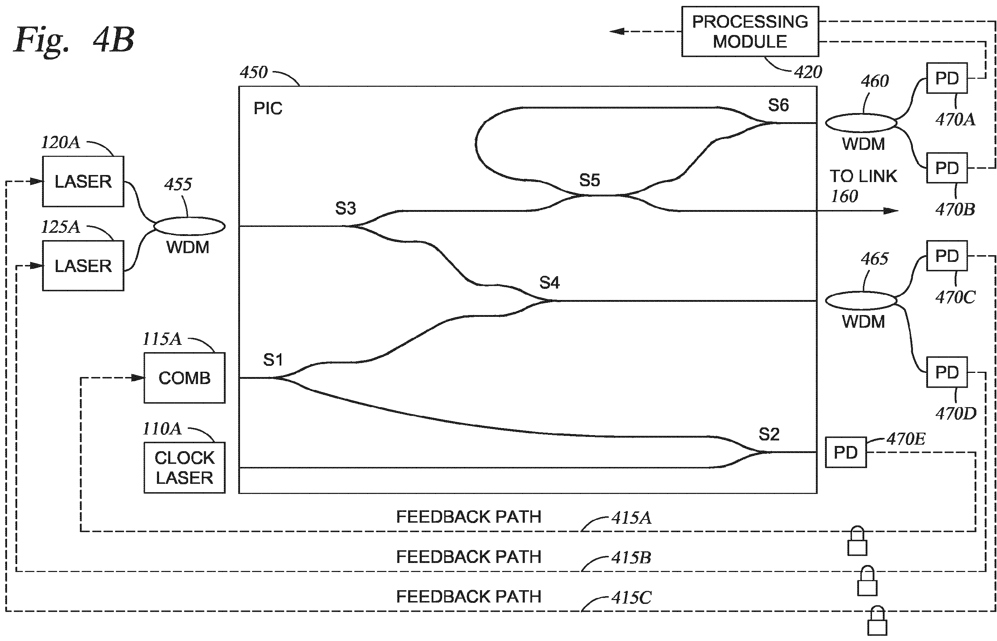

Figure 4B illustrates PIC 450 and electrical components for performing a continuous wave two-way optical time transfer, according to one embodiment. Like the PIC 400 in Figure 4A, the PIC 450 includes the lasers 120A and 125A, the comb 115A, and the clock laser 110A. However, unlike the PIC 400, the system includes a WDM 455 that combines the lasers 120A and 125A into a combined optical signal and then transmits that optical signal onto the PIC 450. This combined optical signal is split at S3 where a portion of this signal is combined, at S4, with a portion of the comb 115A. This correlates to S7 and S6 in the PIC 400 in Figure 4A. However, instead of using separate waveguides to combine the laser signals with the comb 115, the PIC 450 uses one waveguide. A WDM 465 can then be used to separate out the signals according to frequency into two signals. One signal is detected by the PD 470C and used in feedback 415C to adjust the laser 120A while the other signal is detected by PD 470D and used in feedback path 415B to adjust the laser 125A. In one embodiment, the beatnotes from the PD 470C and PD 470D are used to phase lock the lasers 120A and 125A to the frequency comb 115A, respectively, via feedback paths 415B and 415C. This process transfers the stability of the atomic clock to the lasers 120A and 125A as discussed above.

The upper output of the splitter S3 is then split again at coupler S5. One part of the output at coupler S5 exits the PIC 450 and is then transmitted, in free space, on the link 160 to the other platform (e.g., Platform B). The combined signal received from Platform B on the link 160 is received at the coupler S5 and combined with the combined signals of the lasers 120A and 125A at coupler S6. The output of the coupler S6 is separated according to frequency into two signals by a WDM 460, which are detected by the PDs 470A and 470B. The resulting electrical signals are transmitted to the processing module 420 as discussed above.

The PIC 450 also includes a splitter S1 and coupler S2 for combining the comb 115A and the clock laser 110A which is essentially the same as the PIC 400. This output is detected by the PD 470E and used in the feedback path 415A.

Figure 5 illustrates a PIC 500 for performing a CW two-way optical time transfer, according to one embodiment. Unlike in Figures 4A and 4B where many of the electrical components (e.g., the lasers, PDs, and WDMs) are implemented off chip, the PIC 500 includes many of these components on the chip. For example, the lasers 120A and 125A can be implemented where laser cavities 510A and 510B are formed on the PIC 500. In this example, the laser cavities 510A and 510B can be tunable lasers, such as tunable Vernier lasers. As shown, the laser cavities 510A and 510B have two rings where the optical path length of the rings defines the wavelength of the laser.

The lasers 120A and 125A also include reflective semiconductor optical amplifiers (RSOAs) 505A and 505B which amplify the laser signals received from the laser cavities 510A and 510B, respectively. For example, the material of the PIC 500 (e.g., glass, silicon or silicon nitride) may not be an active material, and as such, cannot provide gain to the laser signal. The RSOAs 505A and 505B, on the other hand, can be made from an active material (e.g., semiconductor materials capable of amplifying light through stimulated emissions, such as III-V semiconductors InGaAs or GaAs).

In one embodiment, the RSOAs 505A and 505B are mated to the PIC 500. Because the RSOAs 505A and 505B can be considered a different substrate or PIC from the PIC 500, they can be referred to as a hybrid integrated platform or system that interfaces two different materials (e.g., the active material of the RSOAs 505A and 505B and the inactive material of the substrate of the PIC 500). For example, the RSOAs 505A and 505B may be butt coupled to the PIC 500. Advantageously, by mating the RSOAs 505A and 505B with the PIC 500, the system avoids using optical fiber to connect the RSOAs 505A and 505B to the PIC 500. This reduces the size of packaging, is easier to align, and may improve reliability in the presence of vibration or sudden accelerations. Alternatively, the active gain material can be directly bonded to the base PIC platform via heterogeneous integration, which may be more difficult to implement but has the advantage of mass production at the PIC fabrication stage. While a RSOA is described, other suitable types of semiconductor optical amplifiers (SOA) can be used.

While a Venier laser is shown, other types of lasers can be implemented on the PIC 500 such as distributed feedback (DFB) lasers, distributed Bragg reflector (DBR) lasers, self-injection locked lasers, SBS (Stimulated Brillouin Scattering) lasers, and the like. In some of these cases (e.g., with a DFB), a separate laser chip typically formed from a different semiconductor substate is mated to the PIC (e.g., butt coupled) to generate the laser signal where there may, or may not, be a laser cavity integrated on the PIC 500.

The output of the laser 120A is split by splitter S1 where a portion of the laser is transmitted to a combiner S2 where it is combined with the frequency comb 115A (via the splitters S3 and S4). This combined signal (i.e., the output of combiner S2) is received at a dense wavelength division multiplexer (DWDM) 515. The output of the DWDM is detected by a PD 540A. This corresponds to the same signal that is detected by the PD 410C in Figure 4A (which is also a combination of the laser 120A and the frequency comb 115A). This detected signal can then be used as discussed above with the feedback path 415B to lock the laser 120A.

The other output of the splitter S1 is received at a mux 525, which combines the laser 120A with a modulated version of the laser 125A. The combined signal of the lasers 120A and 125A is then provided to an intra-laser beatnote PD 540G (via the splitter S7) and to the link 160 (via the splitters S7 and S8).

As discussed above, the link 160 facilitates both transmitting the local laser signals 120A and 125A to the second platform as well receiving the laser signals generated by the second platform (i.e., lasers 120B and 125B in Figure 1) in free space or optical fiber. A portion of the two laser signals received from the second platform are directed by the splitter S8 to the splitter S9, where they are combined with the two local laser signals generated on the PIC 500 using lasers 120A and 125A. In this example, the two local laser signals are attenuated by an attenuator 545 so the power of the two local laser signals is closer to the power of the two laser signals received from the second platform (since their power was likely reduced due to being transmitted in free space or through an optical fiber).

The splitter S9 combines the local and received laser signals and directs portions of this combined signal to demultiplexer (demux) 530 and demux 535. The demuxes 530 and 535 separate the combined signals by wavelength to mitigate cross talk between the signals before they are detected using the PDs 540C-F.

The PDs 540C-F perform balanced detection. While the embodiments herein can be performed using the output from only one arm of the splitter S9, that means half of the signal is wasted. Instead, the beatnotes detected by the top PDs of the pairs (e.g., PDs 540C and 540E) can be combined to form the beatnote for one of the CW signals (e.g., one color or one wavelength), while the beatnotes detected by the bottom PDS of the pairs (e.g., PDs 540D and 540F) can be combined to form the beatnote for the other CW signal (e.g., the other color or other wavelength). Any common mode noise of the two PDs in a pair (e.g., the PDs 540C and 540E and the PDs 540Da and 540F) can be removed by subtracting the beatnotes in each pair, which is not shown in Figure 5.

Notably, the locally-generated optical signal and the remotely received optical signal for the first CW laser have slightly different frequencies in order to generate the beatnotes measured by one pair of the PDs 540. The locally-generated optical signal and the remotely received optical signal for the second color also have slightly different frequencies in order to generate the beatnotes measured by the other pair of the PDs 540. In one embodiment, the frequency differences of the locally-generated and remotely received optical signals of the same color are much smaller than the frequency difference between the two colors. For example, the frequency differences between the optical signals that are the same color can range from 10 MHz to 10 GHz while the frequency difference between the two colors can be greater than 50 GHz.

The beatnote determined by subtracting the beatnotes measured by the pair of PDs 540C and 540E in Figure 5 can correspond to the beatnote measured by the PD 410A in Figure 4A while the beatnote determined by subtracting the beatnotes measured by the pair of PDs 540D and 540F in Figure 5 can correspond to the beatnote measured by the PD 410D in Figure 4A. These beatnotes can then be provided to a processing module (e.g., the processing module 420 in Figure 4A).

The output of the laser 125A is also combined with the frequency comb using the splitters S3, S4, S5, and S6. The output of the splitter S5 passes through the DWDM 520 and is detected by PD 540B. This corresponds to the same signal that is detected by the PD 410B in Figure 4A (which is also a combination of the laser 125A and the frequency comb 115A). This detected signal can then be used as discussed in Figure 4A with the feedback path 415C to lock the laser 125A.

The splitter S3 also transmits a portion of the frequency comb 115A to a PD 540H for detecting the comb repetition rate (comb rep rate).

Notably, the PIC 500 includes optical components that were not on the PIC 400 in Figure 4A. For example, in Figure 4A the PDs 410 and the WDM 405 were external to the PIC 400. However, PIC 500 includes multiple DWDMs, MUX/DEMUX, PDs, and a modulator 510. For example, the MUX/DEMUXes can be arrayed waveguide gratings (AWGs), resonators, Bragg gratings, and the like.

The modulator 510 can be a co-integrated LiNbO3 or a III-V semiconductor material which is deposited on the PIC 500. For applications where synchronization is required or laser ranging, unambiguous knowledge of the timing offset or the link path is required. This means the ambiguity range of the system should be extended until a more conventional ranging/synchronization system can resolve the offset (with less precision). Adding the modulator 510 to one of the lasers (e.g., laser 125A in this example) to create a sideband at a much smaller frequency offset than the frequency offset between the two CW optical signals creates a coarser but larger dynamic range measurement. For example, 100 MHz modulation frequency extends the ambiguity range to 3 meters or 10 ns. This ambiguity can easily be resolved with a conventional optical or RF link. Similar to the method described above, the signal from the photodiode that detects the modulated laser light is demodulated at the modulation frequency. A comparison of the extracted phases at the baseband and modulation frequency reveals the link distance. The modulation frequency of the modulator 510 may be dynamically tuned to provide an adjustable ambiguity range. Thus, the output of the modulator 510 is a frequency-modulated CW signal.

In another embodiment, the PIC includes another modulator for modulating the optical signal generated by the laser 120A. This modulator can be disposed between the splitters S1 and combiner S2. By splitting the lasers 125A and 120A before performing modulation, this advantageously means the unmodulated versions of these optical signals can be combined with the frequency comb 115A and detected by the PDs 540A and 540B. The modulated version of the optical signals of the lasers 120A and 125B can then be combined at the mux 525.

In other embodiments, different combinations of the optical components may be on, or off, the PIC 500. For example, in other embodiments, the PDs 540 may not be integrated onto the PIC 500. Or, the modulator 510 may be a separate modulator rather than being integrated onto the PIC 500. Thus, different combinations of the optical components (e.g., the laser cavities, DWDMs, MUX/DEMUX, PDs, and the modulator) can be on and off the PIC 500.

Figure 6 illustrates a PIC 600 for performing a CW two-way optical time transfer, according to one embodiment. Unlike in Figure 5 where the two CW optical signals from the lasers 120A and 125B are combined by MUX 525 and then, after interfering with signals from the remote site, demuxed by DEMUX 530 and 535, in Figure 6 the PIC 600 includes fewer MUX/DEMUXes because the CW optical signals are combined and split by a single MUX/DEMUX right before being transmitted on the link 160. That is, in PIC 500 when the combined light is received at the splitters S7-S9, both CW wavelengths are present and are separated by the DEMUXes 530 and 535 before being detected by the PDs 540C-F. This keeps out-of-loop paths to a minimum, but adds the DEMUXes 530 and 535 to separate the CW signals to mitigate cross-talk between the beatnotes. In PIC 600, there are fewer MUX/DEMUXes because the two local CW optical signals are combined by a MUX/DEMUX 605 after the splitters S2 and S8 and then transmitted on the link 160. The same MUX/DEMUX 605 is used to split the incoming CW optical signals from the remote site. An advantage of PIC 600 relative to PIC 500 is there are fewer DEMUX/MUXes so there is less chance of these optical components being poorly fabricated and negatively impacting the system. However, a disadvantage of PIC 600 relative to PIC 500 is there are more non-common paths between the two CW optical signals. That is, the two CW optical signals in PIC 500 travel along the same path for a longer distance than the two CW optical signals in PIC 600.

The PIC 600, however, produces the same signals as the PIC 500. That is, the laser 120A is combined with the frequency comb using the splitters S3, S4, and S5 which is then received at the DWDM 515 and detected by the PD 540A, like in PIC 500. Similarly, the laser 125A is combined with the frequency comb using the splitters S5, S6, and S7 and the resulting optical signal is then received at the DWDM 520 and detected by the PD 540B.

To mix the local CW optical signals with the received CW optical signals from the second platform, the CW optical signals are received by the MUX/DEMUX 605 and separated where the CW optical signal with the same wavelength as the laser 120A is transmitted on the upper output and the CW optical signal with the same wavelength as the laser 125A is transmitted on the lower output. The laser 120A is attenuated (using the attenuator 610) and combined with the received CW optical signal using the splitters/combiners S1, S2, and S3 and detected by the PDs 540C and 540E. As above, the beatnotes of these PDs can be subtracted to remove common mode noise. The resulting beatnote can then be sent to a processing module. This forms an upper loop.

Turning to the lower loop, the laser 125A is attenuated (using the attenuator 615) and combined with the received CW optical signal using the splitters/combiners S7, S8, and S9 and detected by the PDs 540D and 540F. As above, the beatnotes of these PDs can be subtracted to remove common mode noise. The resulting beatnote can then be sent to a processing module. Moreover, the laser 125A can be modulated using the modulator 510 as discussed in Figure 5.

To transmit the local CW optical signals to the second platform, the laser 120A is routed to the MUX/DEMUX 605 using the splitters S3 and S2 while the laser 125A is routed to the MUX/DEMUX 605 using the splitters S7 and S8. The MUX/DEMUX 605 then combines (e.g., muxes) the two CW optical signals together and transmits them on the link 160. Unlike the MUXes and DEMUXes in Figure 5 which either mux or demux, but not both, the MUX/DEMUX 605 in PIC 600 can be a AWG that performs both functions (i.e., muxes in one direction and demuxes in the other direction).

While not shown in Figure 6, in one embodiment the PIC 600 can also include the comb rep rate and intra-laser beatnote PDs illustrated in Figure 5. That is, these PDs can also be located on the PIC 600, or external of the PIC 600.

While the PDs 540 in PIC 600 are shown as being external to the PIC 600, they can also be integrated onto the PIC 600 as shown in the PIC 500. Moreover, different combinations of the optical components may be on or off the PIC 600. For example, in other embodiments, the modulator 510 may be a separate modulator rather than being integrated onto the PIC 600. Thus, different combinations of the optical components (e.g., the laser cavities, DWDMs, MUX/DEMUX, PDs, and the modulator) can be on and off the PIC 600.

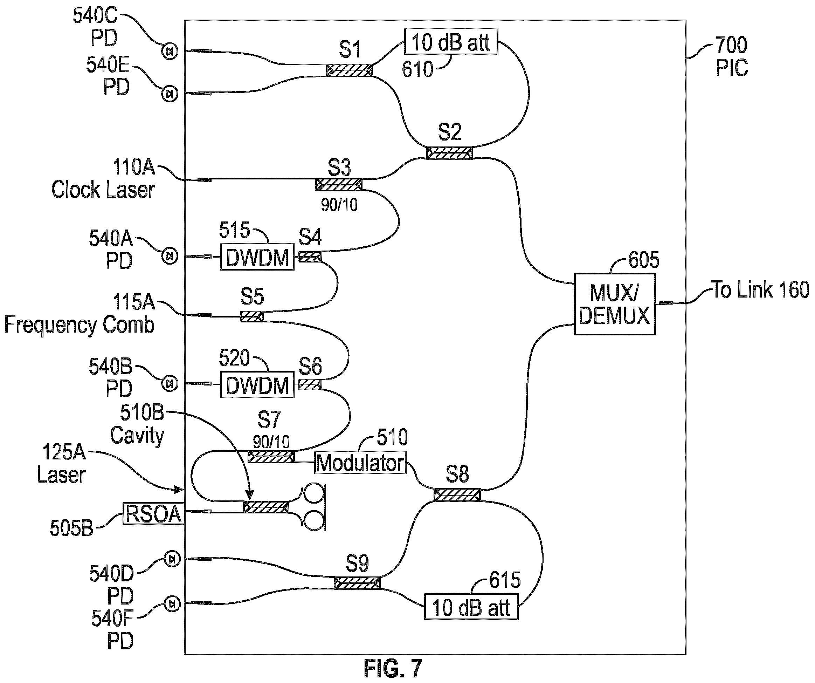

Figure 7 illustrates a PIC 700 for performing a CW two-way optical time transfer, according to one embodiment. The PIC 700 is similar as the PIC 600, as indicated by using many of the same reference numbers. However, the PIC 700 does not include the laser 120A. Instead, the clock laser 110A (e.g., an atomic clock laser) is used as one of the CW lasers. That is, the PIC 700 includes an input port for receiving the atomic clock laser 110A. However, this is dependent on the two-way time transfer being able to be performed at the same wavelength as the clock laser 110A. If so, replacing one of the on-chip lasers with the clock laser 110A advantageously removes a laser and the frequency comb can be stabilized to the clock laser 110 on the PIC 700 (assuming there is a direct spectral overlap between these two signals).

Figure 8 illustrates a PIC 800 for performing a CW two-way optical time transfer with supercontinuum generation, according to one embodiment. The PIC 800 includes a sub-portion 805 and supercontinuum portion 810. The sub-portion 805 can be implemented using any of the designs discussed above for PICs 500, 600, or 700 in Figures 5-7. Stated differently, the PICs 500, 600, or 700 can be part of a larger PIC 800 that includes the supercontinuum portion 810.

Placing the supercontinuum portion 810 with the designs of the PICs 500, 600, or 700 means the frequency comb can be self-referenced on the same PIC 800. Additionally, comb stabilization to the clock laser can also be performed on the PIC 800 using the supercontinuum portion 810.

Supercontinuum generation can be used to extend the wavelengths of the frequency comb 115A (e.g., spread the spectrum of the frequency comb 115) to include the wavelength of the clock laser 110A. This creates a single timing reference plane for the clock and time transfer system.

Figure 9 illustrates a PIC 900 for performing a CW two-way optical time transfer with supercontinuum generation, according to one embodiment. Like with PIC 800, the sub-portion 805 in the PIC 900 can be implemented using any of the designs discussed above for PICs 500, 600, or 700. The PIC 900 also includes the supercontinuum portion 810, but instead of passing the frequency comb 115A through the supercontinuum portion 810 and then combining the comb 115A with the clock laser 110A, the frequency comb 115A is combined with the clock laser 110A before being received at the supercontinuum portion 810. This assumes there is a direct spectral overlap between the frequency comb 115A and the clock laser 110A without having to perform supercontinuum generation.

Some advantages of the PICs 800 and 900 include, one, supercontinuum generation is often done on its own chip but packaging size and optical alignment is reduced by placing supercontinuum generation on the same chip, and two, there are no optical fibers between the chips which minimizes the out-of-loop non-common phase fluctuations. The PICs 800 and 900 make the pathways as common mode as possible to improve stability.

Figure 10 is a system 1000 for synchronizing clocks between two platforms, according to one embodiment. The circuitry illustrated in system 1000 is one example of the processing module 420 in Figure 4A. Because a phase difference between the remotely received optical signals and the locally-generated optical signals can wrap (e.g., exceed 2pi), previous solutions include a phase extraction module to detect phase wraps so the digital processing system can unwrap these signals. For example, a demodulator only has information regarding a 0 to 2pi phase difference. The phase extraction module is tasked to detect when the phase difference exceeds 2pi. However, the phase extraction module is difficult to implement. The system 1000 avoids having to detect phase wraps.

The system 1000 receives beatnotes 1005A and 1005B where one beatnote 1005A corresponds to the beatnote measured by the PD 410A in Figure 4A (or by subtracting the beatnotes measured by the PDs 540C and 540E in Figure 5) and the other beatnote 1005B corresponds to the beatnote measured by the PD 410D in Figure 4A (or by subtracting the beatnotes measured by the PDs 540D and 540F in Figure 5).

These beatnotes are converted into digital signals using the analog to digital converters (ADCs) 1010A and 1010B. The IQ demodulator 1015A outputs the phase difference between the digitized optical beatnote and a numerically controlled tracking oscillator 1025A (i.e., a numerical tracking oscillator). This phase difference passes through a loop filter 1020A that functions as a Proportional-Integral-Derivative (PID) controller. The output of this loop filter is used to adjust the frequency of the numerically controlled tracking oscillator 1025A in order to drive the fluctuations of the phase difference to zero. By adjusting the frequency as opposed to the phase of the numerically controlled tracking oscillator 1025A, very large phase excursions can be followed without any issues. In situations where fast phase fluctuations at the output of the IQ demodulator 1015A are outside the loop filter bandwidth and are larger than $2\pi$, a variety of phase unwrapping algorithms can be utilized before sending the signal to loop filter 1020A.

Moreover, an adder 1030 combines the parameters output by the loop filter 1020A to a default frequency $f_{static}$ which is an expected value of the beatnote 1005A. That is, absent any noise, the beatnote 1005A should have a frequency of $f_{static}$. The loop filter 1020A corrects $f_{static}$ and that correction is what mirrors the noise on the beatnote 1005A. This correction is typically small compared to $f_{static}$. The output of the adder 1030 is an input to the tracking oscillator 1025A.

In one embodiment, the IQ demodulator 1015A, loop filter 1020A, adder 1030, and tracking oscillator 1025A are part of as a phase locked loop (PLL). For dynamical range reasons, the PLL feeds back a frequency rather than changing the phase directly, which gives the system 1000 essentially infinite range (as many 2pi phase wraps as is needed). $f_{static}$ provides an initialization value or starting value for the PLL. In this manner the PLL performs frequency correction.

The tracking oscillator 1025A mirrors the phase fluctuations corresponding to the beatnote 1005A, The ADC 1010A, IQ demodulator 1015A, loop filter 1020A, adder 1030, and tracking oscillator 1025A form a top servo 1050.

A bottom servo 1060 is formed from the ADC 1010B, IQ demodulator 1015B, loop filter 1020B, adder 1035, and tracking oscillator 1025B. For the bottom servo 1060, most of the phase fluctuations are identical to that of the top servo because the frequencies of the beatnotes 1005A and 1005B are similar. The top servo 1050 tracks the phase fluctuations of beatnote 1005A. That same signal (i.e., $f_{static}$ plus the corrections generated by the loop filter 1020A) captures most of the phase fluctuations of the beatnote 1005B, but there is some amount of non-commonalities. These non-commonalities are what a two-way processing module 1045 uses to synchronize the clocks on the two platforms. That is, the non-common phase fluctuations between the two CW signals is what is relevant for extracting the time difference between the two platforms so the two clocks can then be synchronized.

The output of the loop filter 1020B is added to the output of the loop filter 1020A by the adder 1035. This combined output tracks the phase fluctuations of the beatnote 1005B. The output from the loop filter 1020B is also passed to an integrator 1040. This portion of the digital signal is the non-common fluctuations between the two CW signals which is relevant for extracting the time difference between the two sites. The integrator 1040 converts the frequency output by the tracking oscillators 1025A and 1025B into a timing phase. The two-way processing module 1045 evaluates the timing phase from each site. That is, the exchange of the non-common timing phase from the two sites can be used to synchronize their clocks.

While the system 1000 includes a digital processing system for a two-way time transfer that exchanges two CW optical signals (and thus has two beatnotes), in one embodiment, the system 1000 can be modified for a two-way time transfer system that exchanges only one CW optical signal. For example, there may be a lot of phase noise on the PD used to detect the beatnote from comparing the local CW optical signal to a remotely received CW optical signal. One of the servos shown in the system 1000 (e.g., the top servo 1050 or the bottom servo 1060) can be used to digitally measure the phase noise of the beatnote rather than using an optical actuator to compensate for the phase noise. For example, using this modified version of the system 1000 to remove noise means the two way time transfer system does not have to dither a laser or optical modulator to remove the noise. Instead, the optical noise is converted into the digital domain using one of the servos 1050 or 1060 and tracked digitally using one of the tracking oscillators. In this manner, only half of the system 1000 may be used.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

Further embodiments:

1. A photonic integrated circuit (PIC), comprising:

waveguides configured to combine a first pair of continuous wave (CW) optical signals with a second pair of CW optical signals as part of performing two-way optical time transfer, wherein the second pair of CW optical signals are received at the PIC via a link to a remote platform;
a multiplexer integrated into the PIC, the multiplexer configured to combine the first pair of CW optical signals before the first pair of CW optical signals are transmitted from the PIC to the remote platform; and
a demultiplexer integrated into the PIC, the demultiplexer configured to separate the second pair of CW optical signals into different ones of the waveguides.

2. The PIC of embodiment 1, wherein the multiplexer and demultiplexer are implemented using a single arrayed waveguide grating (AWG) that performs both multiplexing and demultiplexing functions.

3. The PIC of any one of the preceding embodiments , further comprising:
a plurality of demultiplexers, which includes the demultiplexer, wherein the plurality of demultiplexers is configured to separate different frequency signals in the first pair of CW optical signals and the second pair of CW optical signals into different ones of the waveguides.

4. The PIC of embodiment 3, wherein the multiplexer is arranged in the PIC to combine the first pair of CW optical signals before the first pair of CW optical signals are combined with the second pair of CW optical signals.

5. The PIC of any one of the preceding embodiments, wherein the waveguides are configured to transmit a frequency comb, the PIC further comprising:

a splitter configured to split one of the CW optical signals in the first pair of CW optical signals, wherein one output of the splitter is combined with the frequency comb; and
a modulator integrated onto the PIC coupled to a second output of the splitter, wherein the modulator is configured to modulate one of the CW optical signals in the first pair of CW optical signals before the multiplexer combines the first pair of CW optical signals.

6. The PIC of embodiment 5, further comprising:
a second modulator integrated onto the PIC, wherein the second modulator is configured to modulate the other one of the first pair of CW optical signals before the multiplexer combines the first pair of CW optical signals.

7. The PIC of any one of the preceding embodiments, further comprising:
an attenuator configured to attenuate at least one of the first pair of CW optical signals before the at least one of the first pair of CW optical signals is combined with at least one of the second pair of CW optical signals.

8. The PIC of any one of the preceding embodiments, wherein the waveguides are configured to transmit a frequency comb, the PIC further comprising:

a first wavelength division multiplexer (WDM) integrated on the PIC and configured to receive a first one of the first pair of CW optical signals and the frequency comb; and

a second WDM integrated on the PIC and configured to receive a second one of the first pair of CW optical signals and the frequency comb.

9. The PIC of any one of the preceding embodiments, wherein at least one of a semiconductor optical amplifier (SOA) or a laser chip is mated to the PIC and aligned with the waveguides to generate a first one of the first pair of CW optical signals.

10. The PIC of embodiment 9, further comprising:
a first laser cavity integrated into the PIC, the first laser cavity aligned to the SOA or laser chip to generate the first one of the first pair of CW optical signals.

11. The PIC of embodiment 10, further comprising:
a second SOA or second laser chip mated to the PIC and aligned with the waveguides to generate a second one of the first pair of CW optical signals.

12. The PIC of embodiment 11, further comprising:
a second laser cavity integrated into the PIC, the second laser cavity aligned to the second SOA or second laser chip to generate the second one of the first pair of CW optical signals.

13. The PIC of any one of the preceding embodiments 9 to 12, further comprising:
an input port configured to receive an atomic clock laser, wherein the atomic clock laser serves as a second one of the first pair of CW optical signals.

14. The PIC of any one of the preceding embodiments, wherein the waveguides are configured to transmit a frequency comb, further comprising:

an input port configured to receive an atomic clock laser, wherein the frequency comb is combined with the atomic clock laser; and
a supercontinuum portion in the PIC configured to extend a spectrum of the frequency comb.

15. The PIC of any one of the preceding embodiments, further comprising:
a plurality of photodetectors (PDs) integrated into the PIC, the plurality of PDs configured to detect optical signals derived from the first and second pair of CW optical signals.

16. A photonic system, comprising:

a PIC according to any one of the preceding claims or a PIC comprising:
waveguides configured to combine a first pair of continuous wave (CW) optical signals with a second pair of CW optical signals as part of performing two-way optical time transfer, wherein the second pair of CW optical signals are received at the PIC via a link to a remote platform, and

a laser chip mated to the PIC to generate a first one of the first pair of CW optical signals.

17. A system for performing two-way optical time transfer, comprising:

an analog to digital converter (ADC) configured to convert a beatnote based on a locally-generated optical signal and a remotely received optical signal to a digital signal;
a IQ demodulator configured to receive the digital signal;
a loop filter coupled to an output of the IQ demodulator; and
a numerical tracking oscillator coupled to an output of the loop filter, wherein the numerical tracking oscillator mirrors phase fluctuations corresponding to the beatnote.

18. The system of embodiment 17, wherein the IQ demodulator, loop filter, and numerical tracking oscillator form part of a phase locked loop.

19. The system of any one of embodiments 17 and 18, further comprising:

a second ADC configured to convert a second beatnote to a second digital signal;

a second IQ demodulator configured to receive the second digital signal;

a second loop filter coupled to an output of the second IQ demodulator; and

a second numerical tracking oscillator coupled to the output of the loop filter and an output of the second loop filter.

20. The system of embodiment 19, further comprising:

circuitry configured to compare the output of the loop filter and the output of the second loop filter, wherein the output of the circuitry represents non-common phase fluctuations between the locally-generated optical signal and the remotely received optical signal; and

an integrator configured to convert frequency outputs of the numerical tracking oscillator and the second numerical tracking oscillator into a timing phase.

21. The system of embodiment 20, further comprising:

a two-way processing module configured to receive the timing phase and a second timing phase from a remote platform to synchronize clocks in the remote platform and a local platform.

22. The system of any one of embodiments 19 to 21, wherein the locally-generated optical signal and the remotely received optical signal are CW optical signals at a first color, wherein the second beatnote is based on a second locally-generated CW optical signal and a second remotely received optical signal that have a second color different from the first color.

**Claims**

1. A photonic integrated circuit (PIC), comprising:

    waveguides configured to combine a first pair of continuous wave (CW) optical signals with a second pair of CW optical signals as part of performing two-way optical time transfer, wherein the second pair of CW optical signals are received at the PIC via a link to a remote platform;

    a multiplexer integrated into the PIC, the multiplexer configured to combine the first pair of CW optical signals before the first pair of CW optical signals are transmitted from the PIC to the remote platform; and

    a demultiplexer integrated into the PIC, the demultiplexer configured to separate the second pair of CW optical signals into different ones of the waveguides.

2. The PIC of claim 1, wherein the multiplexer and demultiplexer are implemented using a single arrayed waveguide grating (AWG) that performs both multiplexing and demultiplexing functions.

3. The PIC of any one of the preceding claims, further comprising:

    a plurality of demultiplexers, which includes the demultiplexer, wherein the plurality of demultiplexers is configured to separate different frequency signals in the first pair of CW optical signals and the second pair of CW optical signals into different ones of the waveguides.

4. The PIC of claim 3, wherein the multiplexer is arranged in the PIC to combine the first pair of CW optical signals before the first pair of CW optical signals are combined with the second pair of CW optical signals.

5. The PIC of any one of the preceding claims, wherein the waveguides are configured to transmit a frequency comb, the PIC further comprising:

    a splitter configured to split one of the CW optical signals in the first pair of CW optical signals, wherein one output of the splitter is combined with the frequency comb; and

    a modulator integrated onto the PIC coupled to a second output of the splitter, wherein the modulator is configured to modulate one of the CW optical signals in the first pair of CW optical signals before the multiplexer combines the first pair of CW optical signals.

6. The PIC of claim 5, further comprising:

    a second modulator integrated onto the PIC, wherein the second modulator is configured to modulate the other one of the first pair of CW optical signals before the multiplexer combines the first pair of CW optical signals.

7. The PIC of any one of the preceding claims, further comprising:
an attenuator configured to attenuate at least one of the first pair of CW optical signals before the at least one of the first pair of CW optical signals is combined with at least one of the second pair of CW optical signals.

8. The PIC of any one of the preceding claims, wherein the waveguides are configured to transmit a frequency comb, the PIC further comprising:

a first wavelength division multiplexer (WDM) integrated on the PIC and configured to receive a first one of the first pair of CW optical signals and the frequency comb; and
a second WDM integrated on the PIC and configured to receive a second one of the first pair of CW optical signals and the frequency comb.

9. The PIC of any one of the preceding claims, wherein at least one of a semiconductor optical amplifier (SOA) or a laser chip is mated to the PIC and aligned with the waveguides to generate a first one of the first pair of CW optical signals.

10. The PIC of claim 9, further comprising:
a first laser cavity integrated into the PIC, the first laser cavity aligned to the SOA or laser chip to generate the first one of the first pair of CW optical signals.

11. The PIC of claim 10, further comprising:
a second SOA or second laser chip mated to the PIC and aligned with the waveguides to generate a second one of the first pair of CW optical signals.

12. The PIC of claim 11, further comprising:
a second laser cavity integrated into the PIC, the second laser cavity aligned to the second SOA or second laser chip to generate the second one of the first pair of CW optical signals.

13. The PIC of claim 9, further comprising:
an input port configured to receive an atomic clock laser, wherein the atomic clock laser serves as a second one of the first pair of CW optical signals.

14. The PIC of any one of the preceding claims, wherein the waveguides are configured to transmit a frequency comb, further comprising:

an input port configured to receive an atomic clock laser, wherein the frequency comb is combined with the atomic clock laser; and
a supercontinuum portion in the PIC configured to extend a spectrum of the frequency comb.

15. The PIC of any one of the preceding claims, further comprising:
a plurality of photodetectors (PDs) integrated into the PIC, the plurality of PDs configured to detect optical signals derived from the first and second pair of CW optical signals.

*Fig. 1*

```
                                                                    200
┌─────────────────────────────────────────────────────────┐ ┌─ 205
│          LOCK A FREQUENCY COMB TO A CLOCK                 │
│          OPTICAL SIGNAL IN A FIRST PLATFORM               │
└─────────────────────────────────────────────────────────┘
                            │
                            ▼
┌─────────────────────────────────────────────────────────┐ ┌─ 210
│         LOCK TWO LOCAL CW OPTICAL SIGNALS IN THE          │
│         FIRST PLATFORM TO THE FREQUENCY COMB              │
└─────────────────────────────────────────────────────────┘
                            │
                            ▼
┌─────────────────────────────────────────────────────────┐ ┌─ 215
│          DETERMINE A TIMING DEVIATION BETWEEN            │
│    THE CLOCK IN THE FIRST PLATFORM AND A CLOCK IN        │
│    THE SECOND PLATFORM BY EXCHANGING, IN FREE           │
│    SPACE, THE TWO CW OPTICAL SIGNALS GENERATED          │
│      IN THE FIRST PLATFORM WITH TWO CW OPTICAL           │
│      SIGNALS GENERATED IN THE SECOND PLATFORM            │
└─────────────────────────────────────────────────────────┘
```

## Fig. 2

```
                                                                    300
┌─────────────────────────────────────────────────────────┐ ┌─ 305
│     LOCK A FREQUENCY COMB TO A CLOCK OPTICAL SIGNAL       │
└─────────────────────────────────────────────────────────┘
                            │
                            ▼
┌─────────────────────────────────────────────────────────┐ ┌─ 310
│  LOCK A FIRST CW OPTICAL SIGNAL AND A SECOND CW OPTICAL   │
│   SIGNAL TO THE FREQUENCY COMB WHERE THE FIRST AND        │
│ SECOND CW OPTICAL SIGNALS HAVE DIFFERENT FREQUENCIES      │
└─────────────────────────────────────────────────────────┘
                            │
                            ▼
┌─────────────────────────────────────────────────────────┐ ┌─ 315
│        RECEIVE A THIRD CW OPTICAL SIGNAL AND A FOURTH     │
│        CW OPTICAL SIGNAL FROM A REMOTE PLATFORM           │
└─────────────────────────────────────────────────────────┘
                            │
                            ▼
┌─────────────────────────────────────────────────────────┐ ┌─ 320
│   COMBINE THE FIRST CW OPTICAL SIGNAL WITH THE THIRD      │
│    CW OPTICAL SIGNAL TO GENERATE A FIRST COMBINED         │
│   OPTICAL SIGNAL AND COMBINE THE SECOND CW OPTICAL        │
│    SIGNAL WITH THE FOURTH CW OPTICAL SIGNAL TO            │
│     GENERATE A SECOND COMBINED OPTICAL SIGNAL             │
└─────────────────────────────────────────────────────────┘
                            │
                            ▼
┌─────────────────────────────────────────────────────────┐ ┌─ 325
│    CONVERT THE FIRST AND SECOND COMBINED OPTICAL          │
│     SIGNALS INTO RESPECTIVE ELECTRICAL SIGNALS            │
└─────────────────────────────────────────────────────────┘
```

## Fig. 3

Fig. 4A

EP 4 671 861 A1

Fig. 4B

EP 4 671 861 A1

**FIG. 5**

FIG. 6

**FIG. 7**

EP 4 671 861 A1

**FIG. 8**

**FIG. 9**

EP 4 671 861 A1

FIG. 10

Europäisches
Patentamt

European
Patent Office

Office européen
des brevets

# EUROPEAN SEARCH REPORT

**Application Number**

EP 25 18 5430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 354 762 A1 (VECTOR ATOMIC INC [US]) 17 April 2024 (2024-04-17) * paragraph [0009] - paragraph [0010] * * paragraph [0030] * * paragraph [0050] * * figures 1, 4(a), 4(b), 5, 9 * ----- | 1-15 | INV. G02F1/365 H04J3/06 H04J14/02 |
| Y | GB 2 623 747 A (TOSHIBA KK [JP]) 1 May 2024 (2024-05-01) * figures 1, 4 * * page 6, line 15 - line 25 * ----- | 1-15 | |
| A | US 2004/033004 A1 (WELCH DAVID F [US] ET AL) 19 February 2004 (2004-02-19) * paragraph [0006] - paragraph [0014] * * paragraph [0147] - paragraph [0148] * * paragraph [0173] - paragraph [0174] * ----- | 1-15 | |
| A | US 2019/158186 A1 (SCHMOGROW RENE [US] ET AL) 23 May 2019 (2019-05-23) * paragraph [0002] - paragraph [0003] * * paragraph [0012] - paragraph [0014] * * paragraph [0054] - paragraph [0055] * ----- | 1 | TECHNICAL FIELDS SEARCHED (IPC) G02F H04L H04J |
| A | EP 1 436 869 B1 (INFINERA CORP [US]) 1 June 2016 (2016-06-01) * paragraph [0005] - paragraph [0009] * * paragraph [0046] * ----- | 1 | |

The present search report has been drawn up for all claims

| Place of search | Date of completion of the search | Examiner |
|---|---|---|
| The Hague | 18 October 2025 | Votini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 5430

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2025

| Patent document cited in search report | | Publication date | Patent family member(s) | | Publication date |
|---|---|---|---|---|---|
| EP 4354762 | A1 | 17-04-2024 | EP | 4354762 A1 | 17-04-2024 |
| | | | US | 2024136786 A1 | 25-04-2024 |
| GB 2623747 | A | 01-05-2024 | GB | 2623747 A | 01-05-2024 |
| | | | JP | 7615252 B2 | 16-01-2025 |
| | | | JP | 2024060573 A | 02-05-2024 |
| US 2004033004 | A1 | 19-02-2004 | US | 2004033004 A1 | 19-02-2004 |
| | | | US | 2005014300 A1 | 20-01-2005 |
| | | | US | 2005129350 A1 | 16-06-2005 |
| | | | US | 2005135729 A1 | 23-06-2005 |
| | | | US | 2005135730 A1 | 23-06-2005 |
| | | | US | 2005135731 A1 | 23-06-2005 |
| | | | US | 2005135778 A1 | 23-06-2005 |
| | | | US | 2005201669 A1 | 15-09-2005 |
| | | | US | 2005207696 A1 | 22-09-2005 |
| | | | US | 2005213883 A1 | 29-09-2005 |
| | | | US | 2005276613 A1 | 15-12-2005 |
| | | | US | 2006067619 A1 | 30-03-2006 |
| | | | US | 2007122148 A1 | 31-05-2007 |
| | | | US | 2007183738 A1 | 09-08-2007 |
| US 2019158186 | A1 | 23-05-2019 | CN | 110679098 A | 10-01-2020 |
| | | | EP | 3613157 A1 | 26-02-2020 |
| | | | US | 2019158186 A1 | 23-05-2019 |
| | | | WO | 2019103940 A1 | 31-05-2019 |
| EP 1436869 | B1 | 01-06-2016 | AU | 2002342020 A1 | 22-04-2003 |
| | | | AU | 2002343486 A1 | 22-04-2003 |
| | | | CA | 2463500 A1 | 17-04-2003 |
| | | | CA | 2463502 A1 | 17-04-2003 |
| | | | DE | 60208416 T2 | 22-06-2006 |
| | | | DE | 60224234 T2 | 08-05-2008 |
| | | | EP | 1436869 A2 | 14-07-2004 |
| | | | EP | 1436931 A2 | 14-07-2004 |
| | | | US | 2003095736 A1 | 22-05-2003 |
| | | | US | 2005013330 A1 | 20-01-2005 |
| | | | US | 2005013331 A1 | 20-01-2005 |
| | | | US | 2005013332 A1 | 20-01-2005 |
| | | | US | 2005018720 A1 | 27-01-2005 |
| | | | US | 2005018721 A1 | 27-01-2005 |
| | | | US | 2005286909 A1 | 29-12-2005 |
| | | | US | 2006062519 A1 | 23-03-2006 |
| | | | US | 2006182441 A1 | 17-08-2006 |
| | | | US | 2007014509 A1 | 18-01-2007 |
| | | | US | 2007019901 A1 | 25-01-2007 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 18 5430

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2025

| Patent document cited in search report | Publication date | Patent family member(s) | | Publication date |
|---|---|---|---|---|
| | | US | 2007172169 A1 | 26-07-2007 |
| | | US | 2009202196 A1 | 13-08-2009 |
| | | WO | 03032547 A2 | 17-04-2003 |
| | | WO | 03032549 A2 | 17-04-2003 |

EPO FORM P0459

For more details about this annex : see Official Journal of the European Patent Office, No. 12/82

page 2 of 2